# EUROPEAN PATENT SPECIFICATION

(11) **EP 3 064 636 B1**
(45) Date of publication and mention of the grant of the patent: **02.08.2017**
(21) Application number: 16158081.6
(22) Date of filing: 01.03.2016
(51) Int. Cl.: D06F 39/02

(54) **MEASURING VESSEL AND LAUNDRY TREATMENT APPARATUS HAVING THE SAME**
MESSGEFÄSS UND WÄSCHEBEHANDLUNGSVORRICHTUNG DAMIT
RÉCIPIENT DE MESURE ET APPAREIL DE TRAITEMENT DE BLANCHISSERIE COMPRENANT CELUI-CI

(30) Priority: 02.03.2015 KR 20150028985
(43) Date of publication of application: 07.09.2016
(73) Proprietor: LG Electronics Inc., Seoul 07336 (KR)
(72) Inventor: JEONG, Kwanwoong, 08592 Seoul (KR); NO, Yanghwan, 08592 Seoul (KR)
(74) Representative: Vossius & Partner Patentanwälte Rechtsanwälte mbB

(56) References cited:
- EP-A1- 2 014 817
- EP-A2- 1 813 708
- WO-A1-01/32973
- WO-A1-96/00178
- US-A- 3 888 391

## Description

The present invention relates to a measuring vessel and a laundry treatment apparatus having the same.

Various types of measuring vessels capable of measuring liquid or powder detergents have been used. However, conventional measuring vessels are configured to have a structure in which a measuring scale is formed on the surface of a measuring vessel for storing detergent and a user determines a necessary amount of detergent using the scale after the user supplies a predetermined amount of detergent into the measuring vessel irrespective of the kind of the detergent.

When a larger amount of detergent than required is supplied into the measuring vessel, therefore, it is necessary to remove the extra detergent from the measuring vessel, which is inconvenient. Meanwhile, in a case in which the measuring vessel is introduced into a washing machine without removing the extra detergent from the measuring vessel even though a larger amount of detergent than required is supplied into the measuring vessel, the detergent is unnecessarily wasted.

An object of the present invention devised to solve the problem lies in a measuring vessel that is capable of measuring the maximum amount of two or more different kinds of detergent at the time of treating a predetermined reference amount of laundry and a laundry treatment apparatus having the same.

Another object of the present invention devised to solve the problem lies in a measuring vessel that is capable of preventing a user from using an excessive amount of detergent at the time of treating a reference amount of laundry and a laundry treatment apparatus having the same.

These objects are achieved with a measuring vessel according to claim 1 and a laundry treatment apparatus according to claim 11.

The object of the present invention can be achieved by providing a measuring vessel including two or more separate storage spaces and having a W shape when viewed in section. "When viewed in section" refers to a view from the side, i.e. a section taken along a vertical plane.

The measuring vessel includes a first body, a first through hole formed through the first body, a second body located in the first through hole, a second through hole formed through the second body, a first connection unit for interconnecting the first body and the second body to define a first storage space between the first through hole and the outer circumferential surface of the second body, and a second connection unit for closing one surface of the second through hole to define a second storage space.

The first storage space and the second storage space may have different volumes.

One selected from between the first storage space and the second storage space is configured to measure the amount of a powder detergent, and the other selected from between the first storage space and the second storage space is configured to measure the amount of a liquid detergent.

The first connection unit is configured to connect a lower end of the first body and a lower end of the second body to each other, and the second connection unit is fixed to the upper end of the second body.

The distance from the first connection unit to the second connection unit may be shorter than the distance from the first connection unit to the upper end of the first body. In this case, the first storage space may be configured to store a liquid detergent, and the second storage space may be configured to store a powder detergent.

The sectional shape of the second connection unit may have a single radius of curvature.

The measuring vessel may further include a first indication unit provided at one selected from the upper part and the lower part of the outer circumferential surface of the first body for indicating a detergent measurable through the first storage space and a second indication unit provided at the other selected from the upper part and the lower part of the outer circumferential surface of the first body for indicating a detergent measurable through the second storage space.

One selected from between the first indication unit and the second indication unit, located at the lower part of the outer circumferential surface of the first body, may be configured as a letter or a symbol readable when the first body is located such that the second connection unit faces a ground.

The measuring vessel may further include at least one selected from between a first measuring unit for indicating the volume of a detergent stored in the first storage space and a second measuring unit for indicating the volume of a detergent stored in the second storage space.

The second measuring unit may be configured as a letter or a symbol readable when the first body is located such that the second connection unit faces a ground.

In another aspect of the present invention, provided herein is a laundry treatment apparatus including a cabinet, a tub provided in the cabinet for receiving wash water, a drum provided in the tub for providing a laundry receiving space, and a measuring vessel configured to be introduced into the drum, wherein the measuring vessel includes a first body configured to be introduced into the drum, a first through hole formed through the first body, a second body located in the first through hole, a second through hole formed through the second body, a first connection unit for interconnecting the first body and the second body to define a first storage space between the first through hole and the outer circumferential surface of the second body, and a second connection unit for closing one surface of the second through hole to define a second storage space.
In document EP 2 014 817 A1, a dosing and dispensing device comprising a double wall structure having an inner wall and an outer wall is disclosed. In this invention a method for dosing and dispensing a laundry product is related.
Documents US 3 888 391 A and WO 96/00178 A1 show related technologies.

As is apparent from the above description, the present invention has the effect of providing a measuring vessel that is capable of measuring the maximum amount of two or more different kinds of detergents at the time of treating a predetermined reference amount of laundry and a laundry treatment apparatus having the same.

In addition, the present invention has the effect of providing a measuring vessel that is capable of preventing a user from using an excessive amount of detergent at the time of treating a reference amount of laundry and a laundry treatment apparatus having the same.

The accompanying drawings, which are included to provide a further understanding of the invention, illustrate embodiments of the invention and together with the description serve to explain the principle of the invention.

In the drawings:
FIG. 1 is a view showing an embodiment of a measuring vessel according to the present invention;
FIG. 2 is a sectional view of the measuring vessel according to the present invention; and
FIG. 3 is a view showing an embodiment of a laundry treatment apparatus according to the present invention.

Reference will now be made in detail to the preferred embodiments of the present invention, examples of which are illustrated in the accompanying drawings. It should be noted herein that these embodiments are only for illustrative purposes and the protection scope of the invention is not limited thereto. Wherever possible, the same reference numbers will be used throughout this specification to refer to the same or like parts.

A measuring vessel according to the present invention is characterized in that the measuring vessel includes at least two storage spaces for storing detergents (for example, a liquid detergent and a powder detergent to be measured) and in that introduction ports of the respective storage spaces, through which detergents are discharged or supplied, are not located on the same plane. In other words, the introduction ports are located on different planes.

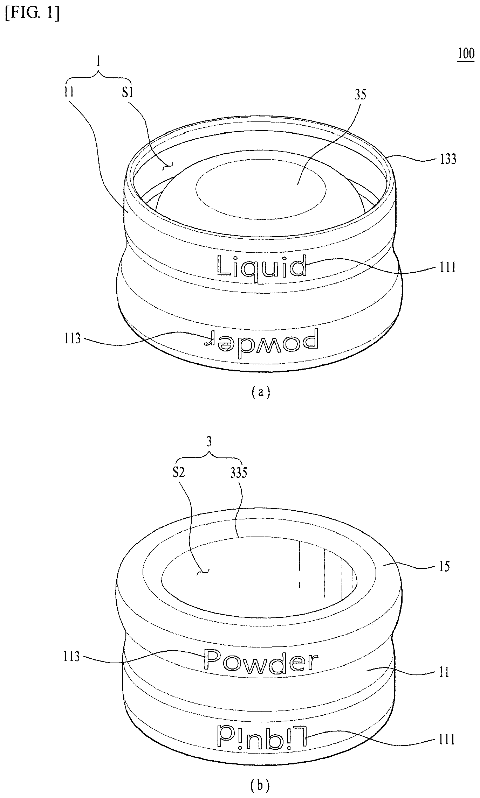

FIG. 1 is a view showing an embodiment of a measuring vessel 100 according to the present invention. The measuring vessel 100 according to this embodiment may include two separate storage spaces S1 and S2, and the measuring vessel 100 may be configured to have a W shape when viewed in section. "When viewed in section" refers to a view from the side, i.e. a section taken along a vertical plane.

That is, the measuring vessel 100 according to the present invention may include a first storage unit 1 having a first storage space S1 for storing a detergent and a second storage unit 3 having a second storage space S2 for storing a detergent, the second storage space S2 being separated from the first storage space S1.

The first storage space S1 or the second storage space S2 may be configured to measure the amount of a powder detergent, and the other of the first storage space S1 or the second storage space S2 may be configured to measure the amount of a liquid detergent. FIG. 1 shows an example in which the first storage space S1 is configured to measure the amount of a liquid detergent, and the second storage space S2 is configured to measure the amount of a powder detergent.

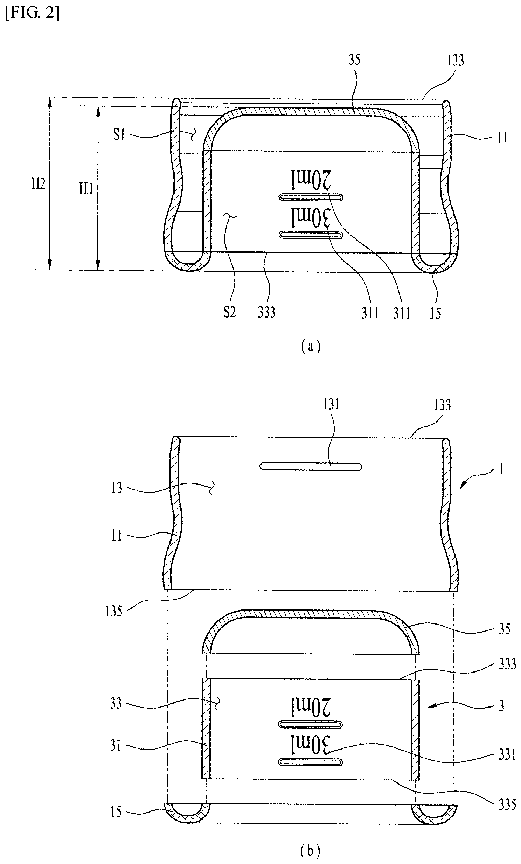

As shown in FIG. 2, the first storage unit 1 includes a first body 11 forming the external appearance of the measuring vessel and a first through hole 13 formed through the first body 11, and the second storage unit 3 includes a second body 31 located in the first through hole 13 and a second through hole 33 formed through the second body 31.

An upper open surface 133 and a lower open surface 135 are formed at the upper surface and the lower surface of the first body 11, respectively, by the first through hole 13, and a second upper open surface 333 and a second lower open surface 335 are formed at the upper surface and the lower surface of the second body 31, respectively, by the second through hole 33.

Since the second upper open surface 333, provided at the second body 31, is closed by a second connection unit 35, the second storage space S2 is defined by the second body 31 and the second connection unit 35. Consequently, a user may supply a detergent into the second storage space S2, or may discharge the detergent from the second storage space S2, through the second lower open surface 335.

The sectional shape over the longitudinal axis of the second connection unit 35 may have a single radius of hemispherical curvature. Alternatively, the sectional shape of the second connection unit 35 may have two radii of curvature.

The sectional shape of the second connection unit 35 having one radius of curvature means that the sectional shape of the second connection unit 35 may be a hemispherical.

The sectional shape of the second connection unit 35 having two radii of curvature means that at least two sections of the second connection unit 35 have different radii of curvature. In the example shown in FIG. 2, the second connection unit 35 includes a flat part having an infinite radius of curvature and a curved part, provided at the edge of the flat part, having a predetermined radius of curvature.

Meanwhile, the lower end of the first body 11 and the lower end of the second body 31 are connected to each other via a first connection unit 15.

Since the lower open surface 135, formed at the lower surface of the first body 11 by the first through hole 13, is closed by the first connection unit 15 and the second storage unit 3, the first storage space S1, which stores a detergent, is defined between the first through hole 13 and the second body 31. Consequently, the user may supply a detergent into the first storage space S1, or may discharge the detergent from the first storage space S1, through the upper open surface 133.

In a case in which the first storage space S 1 is configured to store a liquid detergent and the second storage space S2 is configured to store a powder detergent, the distance H1 from the lowest point of the first connection unit 15 to the highest point of the second connection unit 35 may be shorter than the distance H2 from the lowest point of the first connection unit 15 to the upper end of the first body 11.

In a case in which the highest point of the second connection unit 35 is lower than the upper end of the first body 11 when the measuring vessel 100 is located such that the first connection unit 15 faces the ground, it is possible to minimize the detergent supplied into the first storage space S1 from being discharged from the first storage space S1 when measuring the amount of the liquid detergent.

Meanwhile, the upper open surface 133 and the second lower open surface 335 may be provided on different planes. FIG. 2 shows an example in which the upper open surface 133 is provided at the upper surface of the measuring vessel 100, and the second lower open surface 335 is provided at the bottom surface of the measuring vessel 100.

The upper open surface 133 and the second lower open surface 335 are provided at opposite surfaces of the measuring vessel 100 in order to maximize the volume of the first storage space S1 and the volume of the second storage space S2 and, in addition, to minimize the size of the measuring vessel 100.

The first storage space S 1 and the second storage space S2 may have the same volume. Alternatively, the first storage space S1 and the second storage space S2 may have different volumes.

In a case in which the volume of the first storage space S 1 is set to the maximum amount of a first detergent necessary to treat (for example, wash, rinse, or dry) a predetermined reference amount of laundry and the volume of the second storage space S2 is set to the maximum amount of a second detergent (i.e. a detergent different in kind from the first detergent) necessary to treat the reference amount of laundry, it is not necessary to provide an additional measuring unit (for example, a scale) for enabling the user to recognize the amount of the detergent at the respective storage spaces S1 and S2.

According to the present invention, therefore, it is possible to provide a single measuring vessel that is capable of determining the maximum amount of two kinds of detergents necessary to treat a reference amount of laundry and, in addition, to minimize the volume of the measuring vessel.

Furthermore, in the measuring vessel 100 according to the present invention, it is possible to prevent the user from excessively using the detergent at the time of treating the reference amount of laundry.

Meanwhile, the user may use the measuring vessel 100 according to the present invention in order to treat less than the reference amount of laundry. In this case, the measuring vessel 100 according to the present invention may further include at least one selected from between a first measuring unit 131 for enabling the user to determine the amount of the detergent stored in the first storage space S 1 and a second measuring unit 311 for enabling the user to determine the amount of the detergent stored in the second storage space S3.

The first measuring unit 131 may be configured as a letter or a symbol that is readable when the first body 1 is located such that the second lower open surface 335 faces the ground, and the second measuring unit 331 may be configured as a letter or a symbol that is readable when the first body 1 is located such that the second connection unit 35 faces the ground.

Meanwhile, in a case in which the volumes of the first storage space S1 and the second storage space S3 are different from each other (i.e. the maximum amounts of detergents that can be measured through the respective storage spaces are different from each other), it is necessary to provide members for enabling the user to recognize the kind of the detergent the maximum amount of which can be determined through the respective storage spaces S1 and S2.

According to the present invention, it is possible to enable the user to recognize through which storage space S1 or S2 the maximum amount of each detergent necessary to treat the reference amount of laundry can be determined using a first indication unit 111 and a second indication unit 113 provided at the outer circumferential surface of the first body 11.

FIG. 1 shows an example in which the maximum amount of the liquid detergent can be checked through the first storage space S1 at the time of treating the reference amount of laundry and the maximum amount of the powder detergent can be checked through the second storage space S2 at the time of treating the reference amount of laundry.

However, since the upper open surface 133, through which the first storage space S1 communicate with the outside of the measuring vessel 100, is formed at the upper surface of the measuring vessel 100, and the second lower open surface 335, through which the second storage space S2 communicate with the outside of the measuring vessel 100, is formed at the lower surface of the measuring vessel 100, the second indication unit 113 may be indicated in a state in which the second indication unit 113 is turned over.

That is, the first indication unit 111 may be configured as a letter or a symbol that is readable when the first body 1 is located such that the second lower open surface 335 faces the ground, and the second indication unit 113 may be configured as a letter or a symbol that is readable when the first body 1 is located such that the second connection unit 35 faces the ground.

Meanwhile, the measuring vessel according to the present invention may be introduced into a laundry treatment apparatus having a laundry receiving space.

In addition, the present invention provides a laundry treatment apparatus 200, in which the measuring vessel 100 is provided.

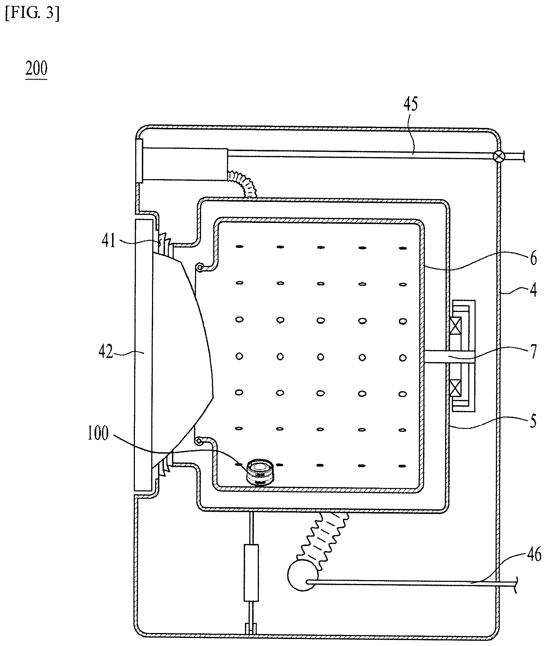

As shown in FIG. 3, the laundry treatment apparatus 200 according to the present invention may include a cabinet 4 forming the external appearance of the laundry treatment apparatus 200, a tub 5 provided in the cabinet 4 for receiving wash water, a drum 6 rotatably provided in the tub 5 for providing a laundry receiving space, and a measuring vessel 100 configured to be introduced into the drum 6.

The cabinet 4 includes a door 42 for opening and closing an introduction port 41. Wash water is supplied to the tub 5 through a water supply unit 45 provided in the cabinet 4, and the wash water in the tub 5 is discharged out of the cabinet 4 through a drainage unit 46 provided in the cabinet 4.

The tub 5 may be provided with a tub introduction port, which communicates with the introduction port 41, and the drum 6 may be provided with a drum introduction port, which communicates with the tub introduction port. Meanwhile, the drum 6 may be rotated in the tub 5 by a driving unit 7.

The structure of the measuring vessel 100 was described in detail with reference to FIGs. 1 and 2, and therefore a detailed description thereof will be omitted.

The laundry treatment apparatus 200 including the measuring vessel 100 is operated as follows. Laundry is introduced into the drum 6 together with the measuring vessel 100. Subsequently, wash water is supplied to the tub 5 through the water supply unit 45, and the drum 6 is rotated by the driving unit 7 to wash the laundry. After washing of the laundry is completed, the wash water is drained through the drainage unit 46.

The present invention provides a measuring vessel that is capable of measuring the maximum amount of two or more different kinds of detergents at the time of treating a predetermined reference amount of laundry and a laundry treatment apparatus having the same.

In addition, the present invention provides a measuring vessel that is capable of preventing a user from using an excessive amount of detergent at the time of treating a reference amount of laundry and a laundry treatment apparatus having the same.

## Claims

1. A measuring vessel comprising:
a first body (11);
a first through hole (13) formed through the first body (11);
a second body (31) located in the first through hole (13);
a second through hole (33) formed through the second body (31);
a first connection unit (15) for interconnecting the first body (11) and the second body (31) to define a first storage space (S1) between the first through hole (13) and an outer circumferential surface of the second body (31); and
a second connection unit (35) for closing one surface of the second through hole (33) to define a second storage space (S2),
**characterized in that** the first connection unit (15) is configured to connect a lower end of the first body (11) and a lower end of the second body (31) to each other, and the second connection unit (35) is fixed to an upper end of the second body (31),
wherein one selected from between the first storage space (S1) and the second storage space (S2) is configured to measure an amount of a powder detergent, and the other selected from between the first storage space (S1) and the second storage space (S2) is configured to measure an amount of a liquid detergent.

2. The measuring vessel according to claim 1, wherein the first storage space (S1) and the second storage space (S2) have different volumes.

3. The measuring vessel according to claim 1, wherein a distance from the first connection unit (15) to the second connection unit (35) is shorter than a distance from the first connection unit (15) to an upper end of the first body (11).

4. The measuring vessel according to claim 3, wherein the first storage space (S1) is configured to store a liquid detergent, and the second storage space (S2) is configured to store a powder detergent.

5. The measuring vessel according to any one of claims 1, 3, and 4, wherein a sectional shape of the second connection unit (35) has a single radius of curvature like a hemispherical.

6. The measuring vessel according to any one of claims 1, and 3 to 5, further comprising:
a first indication unit (111) provided at one selected from an upper part and a lower part of an outer circumferential surface of the first body (11) for indicating a detergent measurable through the first storage space (S1); and
a second indication unit (113) provided at the other selected from the upper part and the lower part of the outer circumferential surface of the first body (11) for indicating a detergent measurable through the second storage space (S2).

7. The measuring vessel according to claim 6, wherein one selected from between the first indication unit (111) and the second indication unit (113), located at the lower part of the outer circumferential surface of the first body (11), is configured as a letter or a symbol readable when the first body (11) is located such that the second connection unit (35) faces a ground.

8. The measuring vessel according to any one of claims 1 to 7, further comprising at least one selected from between:
a first measuring unit (131) for indicating a volume of a detergent stored in the first storage space (S1); and
a second measuring unit (331) for indicating a volume of a detergent stored in the second storage space (S2).

9. The measuring vessel according to claim 8, wherein the second measuring unit (331) is configured as a letter or a symbol readable when the first body (11) is located such that the second connection unit (35) faces a ground.

10. The measuring vessel according to any one of claims 1 to 9, having a W shape when viewed from the side in section taken along a vertical plane.

11. A laundry treatment apparatus comprising:
a cabinet (4);
a tub (5) provided in the cabinet (4) for receiving wash water;
a drum (6) provided in the tub (5) for providing a laundry receiving space; and
a measuring vessel (100) configured to be introduced into the drum (6), wherein the measuring vessel is according to any one of claims 1 to 10.

## Patentansprüche

1. Messgefäß mit:
einem ersten Körper (11);
einem ersten Durchgangsloch (13), das durch den ersten Körper (11) ausgebildet ist;
einem zweiten Körper (31), der im ersten Durchgangsloch (13) angeordnet ist;
einem zweiten Durchgangsloch (33), das durch den zweiten Körper (31) ausgebildet ist;
einer ersten Verbindungseinheit (15) zum gegenseitigen Verbinden des ersten Körpers (11) und des zweiten Körpers (31), um einen ersten Speicherraum (S 1) zwischen dem ersten Durchgangsloch (13) und einer Außenumfangsfläche des zweiten Körpers (31) zu definieren; und
einer zweiten Verbindungseinheit (35) zum Verschließen einer Fläche des zweiten Durchgangslochs (33), um einen zweiten Speicherraum (S2) zu definieren,
**dadurch gekennzeichnet, dass** die erste Verbindungseinheit (15) konfiguriert ist, ein unteres Ende des ersten Körpers (11) und ein unteres Ende des zweiten Körpers (31) miteinander zu verbinden, und die zweite Verbindungseinheit (35) an einem oberen Ende des zweiten Körpers (31) befestigt ist,
wobei ein aus dem ersten Speicherraum (S1) und dem zweiten Speicherraum (S2) ausgewählter konfiguriert ist, eine Menge eines Waschmittelpulvers abzumessen, und der andere aus dem ersten Speicherraum (S 1) und dem zweiten Speicherraum (S2) ausgewählte konfiguriert ist, eine Menge einer Waschmittelflüssigkeit abzumessen.

2. Messgefäß nach Anspruch 1, wobei der erste Speicherraum (S1) und der zweite Speicherraum (S2) unterschiedliche Volumina aufweisen.

3. Messgefäß nach Anspruch 1, wobei ein Abstand von der ersten Verbindungseinheit (15) zur zweiten Verbindungseinheit (35) kürzer als ein Abstand von der ersten Verbindungseinheit (15) zu einem oberen Ende des ersten Körpers (11) ist.

4. Messgefäß nach Anspruch 3, wobei der erste Speicherraum (S1) konfiguriert ist, eine Waschmittelflüssigkeit zu speichern, und der zweite Speicherraum (S2) konfiguriert ist, ein Waschmittelpulver zu speichern.

5. Messgefäß nach einem der Ansprüche 1, 3 und 4, wobei eine Querschnittsform der zweiten Verbindungseinheit (35) einen einzigen Krümmungsradius wie eine Halbkugel aufweist.

6. Messgefäß nach einem der Ansprüche 1, und 3 bis 5, das ferner aufweist:
eine erste Anzeigeeinheit (111), die an einem aus einem oberen Teil und einem unteren Teil einer Außenumfangsfläche des ersten Körpers (11) ausgewählten zum Anzeigen eines Waschmittels vorgesehen ist, das durch den ersten Speicherraum (S1) abmessbar ist; und
eine zweite Anzeigeeinheit (113), die an dem anderen aus dem oberen Teil und dem unteren Teil der Außenumfangsfläche des ersten Körpers (11) ausgewählten zum Anzeigen eines Waschmittels vorgesehen ist, das durch den zweiten Speicherraum (S2) abmessbar ist.

7. Messgefäß nach Anspruch 6, wobei eine aus der aus ersten Anzeigeeinheit (111) und der zweiten Anzeigeeinheit (113) ausgewählte, die am unteren Teil der Außenumfangsfläche des ersten Körpers (11) angeordnet ist, als ein Buchstabe oder ein Zeichen konfiguriert ist, das lesbar ist, wenn der erste Körper (11) so angeordnet ist, dass die zweite Verbindungseinheit (35) zur Erde weist.

8. Messgefäß nach einem der Ansprüche 1 bis 7, das ferner mindestens eine aufweist, die ausgewählt ist aus:
einer ersten Messeinheit (131) zum Anzeigen eines Volumens eines Waschmittels, das im ersten Speicherraum (S1) gespeichert ist; und
einer zweiten Messeinheit (331) zum Anzeigen eines Volumens eines Waschmittels, das im zweiten Speicherraum (S2) gespeichert ist.

9. Messgefäß nach Anspruch 8, wobei die zweite Messeinheit (331) als ein Buchstabe oder ein Zeichen konfiguriert ist, das lesbar ist, wenn der erste Körper (11) so angeordnet ist, dass die zweite Verbindungseinheit (35) zur Erde weist.

10. Messgefäß nach einem der Ansprüche 1 bis 9, die in einem Querschnitt, der längs einer vertikalen Ebene vorgenommen ist, von der Seite betrachtet eine W-Form aufweist.

11. Wäschebehandlungsvorrichtung, die aufweist:
ein Gehäuse (4);
einen Bottich (5), der im Gehäuse (4) zur Aufnahme von Waschwasser vorgesehen ist;
eine Trommel (6), die im Bottich (5) zur Bereitstellung eines Wäscheaufnahmeraums vorgesehen ist; und
ein Messgefäß (100), das konfiguriert ist, in die Trommel (6) eingeführt zu werden, wobei es sich um das Messgefäß nach einem der Ansprüche 1 bis 10 handelt.

## Revendications

1. Récipient de mesure, comprenant :
un premier corps (11) ;
un premier trou traversant (13) formé dans le premier corps (11) ;
un deuxième corps (31) logé dans le premier trou traversant (13) ;
un deuxième trou traversant (33) formé dans le deuxième corps (31) ;
une première unité de connexion (15) destinée à raccorder le premier corps (11) et le deuxième corps (31) pour définir un premier espace de stockage (S1) entre le premier trou traversant (13) et une surface circonférentielle extérieure du deuxième corps (31) ; et
une deuxième unité de connexion (35) destinée à obturer une surface du deuxième trou traversant (33) pour définir un deuxième espace de stockage (S2),
**caractérisé en ce que** la première unité de connexion (15) est prévue pour relier l'une à l'autre une extrémité inférieure du premier corps (11) et une extrémité inférieure du deuxième corps (31), et la deuxième unité de connexion (35) est fixée sur une extrémité supérieure du deuxième corps (31),
un espace sélectionné entre le premier espace de stockage (S1) et le deuxième espace de stockage (S2) étant prévu pour mesurer une quantité de détergent en poudre, et l'autre espace sélectionné entre le premier espace de stockage (S1) et le deuxième espace de stockage (S2) étant prévu pour mesurer une quantité de détergent liquide.

2. Récipient de mesure selon la revendication 1, où le premier espace de stockage (S1) et le deuxième espace de stockage (S2) ont des volumes différents.

3. Récipient de mesure selon la revendication 1,
où une distance entre la première unité de connexion (15) et la deuxième unité de connexion (35) est inférieure à une distance entre la première unité de connexion (15) et une extrémité supérieure du premier corps (11).

4. Récipient de mesure selon la revendication 3, où le premier espace de stockage (S1) est prévu pour stocker un détergent liquide, et le deuxième espace de stockage (S2) est prévu pour stocker un détergent en poudre.

5. Récipient de mesure selon l'une des revendications 1, 3 et 4, où la forme de section de la deuxième unité de connexion (35) présente un seul rayon de courbure, notamment hémisphérique.

6. Récipient de mesure selon l'une des revendications 1, et 3 à 5, comprenant en outre :
une première unité indicatrice (111) prévue sur une partie sélectionnée entre une partie supérieure et une partie inférieure d'une surface circonférentielle extérieure du premier corps (11), pour l'indication d'un détergent mesurable dans le premier espace de stockage (S1) ; et
une deuxième unité indicatrice (113) prévue sur l'autre partie sélectionnée entre la partie supérieure et la partie inférieure de la surface circonférentielle extérieure du premier corps (11), pour l'indication d'un détergent mesurable dans le deuxième espace de stockage (S2).

7. Récipient de mesure selon la revendication 6, où une unité sélectionnée entre la première unité indicatrice (111) et la deuxième unité indicatrice (113), située dans la partie inférieure de la surface circonférentielle extérieure du premier corps (11), est prévue sous forme de lettre ou de symbole lisible quand le premier corps (11) est situé de sorte que la deuxième unité de connexion (35) soit en contact avec le sol.

8. Récipient de mesure selon l'une des revendications 1 à 7, comprenant en outre au moins une unité sélectionnée entre :
une première unité de mesure (131) pour l'indication d'un volume d'un détergent stocké dans le premier espace de stockage (S1) ; et
une deuxième unité de mesure (331) pour l'indication d'un volume d'un détergent stocké dans le deuxième espace de stockage (S2).

9. Récipient de mesure selon la revendication 8, où la deuxième unité de mesure (331) est prévue sous forme de lettre ou de symbole lisible quand le premier corps (11) est situé de sorte que la deuxième unité de connexion (35) soit en contact avec le sol.

10. Récipient de mesure selon l'une des revendications 1 à 9, ayant une forme en W quand il est vu de côté en coupe le long d'un plan vertical.

11. Machine à traiter le linge, comprenant :
une carrosserie (4) ;
une cuve (5) prévue dans la carrosserie (4) pour recevoir de l'eau fraîche ;
un tambour (6) prévu dans la cuve (5) pour former un espace de réception du linge ; et
un récipient de mesure (100) prévu pour être mis en place dans le tambour (6),
ledit récipient de mesure étant le récipient de mesure selon l'une des revendications 1 à 10.
